# EUROPEAN PATENT APPLICATION

(11) **EP 3 106 690 A1**
(43) Date of publication of application: **21.12.2016**
(21) Application number: 16174578.1
(22) Date of filing: 15.06.2016
(51) Int. Cl.: F16C 23/08, F16C 33/46, F16C 33/48, F16C 33/54, F16C 33/60, F16C 43/06, F16C 41/04

(54) **SELF-ALIGNING ROLLER BEARING AND ASSEMBLY METHOD FOR THE SAME**

(30) Priority: 19.06.2015 JP 2015123711
(71) Applicant: JTEKT Corporation, Chuo-ku, Osaka-shi Osaka 542-8502 (JP)
(72) Inventor: YASUDA, Hirotaka, Osaka-shi, Osaka, 542-8502 (JP)
(74) Representative: Winter, Brandl, Fürniss, Hübner, Röss, Kaiser, Polte - Partnerschaft mbB

(57) **Abstract**

A self-aligning roller bearing (1) is provided which includes: an outer ring (3); an inner ring (4); a plurality of spherical rollers (5); a pair of cages (2); and a guide ring (6). Each of the cages has a plurality of pockets, and the pockets house the respective spherical rollers and are identical in number to the spherical rollers in each row. At least one of the pockets in each cage has a larger area than an area of a cross section of the corresponding spherical roller that includes an axis of rotation thereof as viewed in a radial direction, so that each of the spherical rollers is enabled to pass through the at least one pocket without interfering with inner edges of the pocket.

## Description

### BACKGROUND OF THE INVENTION

### 1. Field of the Invention

The invention relates to a self-aligning roller bearing and an assembly method for the self-aligning roller bearing.

### 2. Description of the Related Art

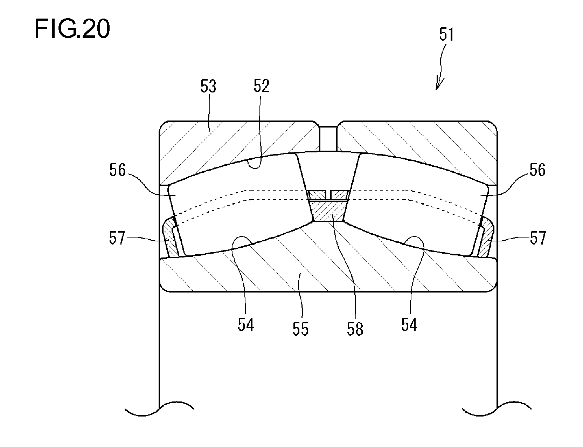

As a self-aligning roller bearing (hereinafter simply referred to as a "bearing"), for example, a bearing depicted in FIG. 20 is conventionally known. A bearing 51 includes an outer ring 53, an inner ring 55, a plurality of spherical rollers 56, a pair of cages 57, and a guide ring 58. The outer ring 53 has an outer-ring raceway surface 52 on an inner periphery of the outer ring 53. The inner ring 55 has two rows of inner-ring raceway surfaces 54 on an outer periphery of the inner ring 55. The spherical rollers 56 are disposed in two rows between the outer-ring raceway surface 52 and the inner-ring raceway surface 54. The cages 57 hold the two rows of spherical rollers 56 such that the spherical rollers 56 in each row are disposed at intervals in a circumferential direction. The guide ring 58 is provided between the inner ring 55 and both the cages 57 and between the two rows of the spherical rollers 56.

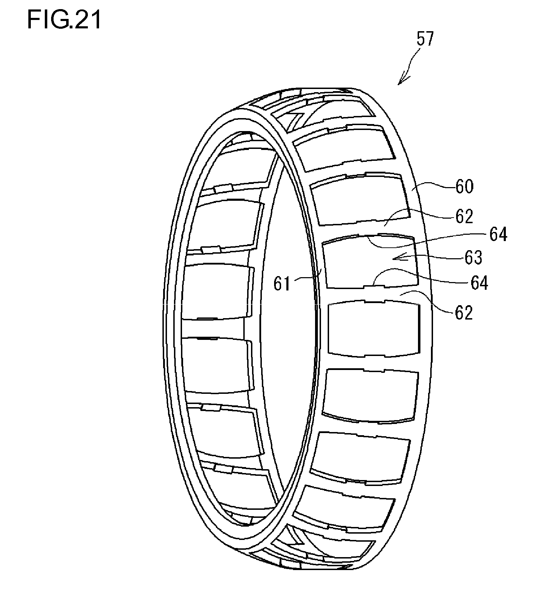

As depicted in FIG. 21, the cage 57 has an inner circular-ring portion 60, an outer circular-ring portion 61, and cage bars 62. The inner circular-ring portion 60 is positioned between the two rows of the spherical rollers 56, that is, on an inner side of the bearing. The outer circular-ring portion 61 faces the inner circular-ring portion 60 in an axial direction of the bearing 51 and is positioned on an outer side of the bearing. The cage bars 62 connect the inner circular-ring portion 60 and the outer circular-ring portion 61 together. The cage bars 62 are provided along the axial direction of the bearing 51. Areas each formed between the adjacent cage bars 62 in the circumferential direction are pockets 63 in which the respective spherical rollers 56 are housed.

The bearing 51 is normally assembled as follows. The guide ring 58 and the cages 57 are assembled on the outer periphery of the inner ring 55. Next, the inner ring 55 with the guide ring 58 and the cages 57 assembled on the inner ring 55 is inserted into the outer ring 53. The inner ring 55 is placed in the outer ring 53 such that an axis of the inner ring 55 is substantially orthogonal to an axis of the outer ring 53 each other. Each of the spherical rollers 56 is then placed in the corresponding pocket 63 in the corresponding cage 57. The spherical roller 56 is placed in the pocket 63 from outside the cages 57, that is, from outside the cages 57 and the inner ring 55 in a radial direction. At this time, the spherical roller 56 is placed in the pocket 63 by passing interference portions 64 formed on the cage 57. The interference portions 64 are formed on the cage 57 to prevent the spherical roller 56 from falling off from the pocket 63 during assembly or the like.

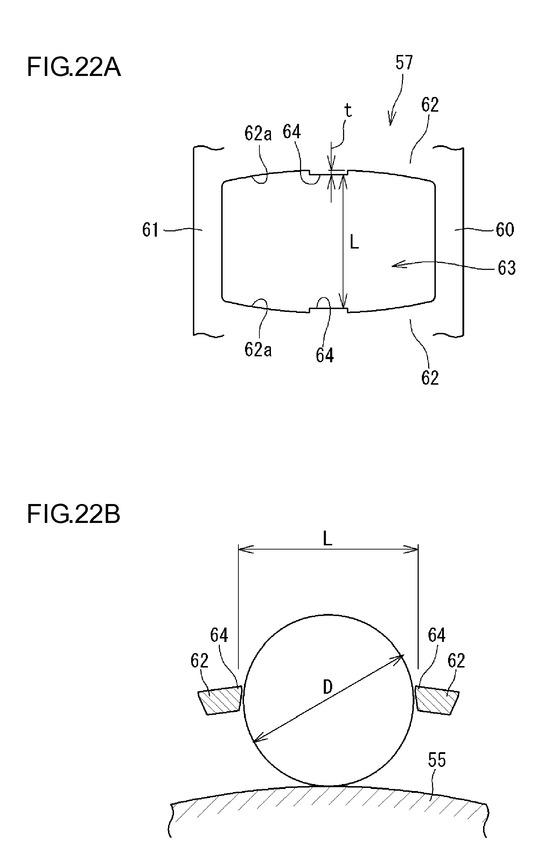

As depicted in FIG. 22, the interference portions 64 are protruding portions formed to protrude from respective side surfaces 62a (side surfaces facing the pockets 63) in a circumferential direction. Each of the interference portions 64 is formed substantially at a central portion of the corresponding cage bar 62 in a longitudinal direction thereof (a lateral direction in FIG. 22A). Two interference portions 64 are formed for each pocket 63. In other words, the interference portions 64 are formed on the respective opposite side surfaces 62a of each cage bar 62.

A protrusion height t of each interference portion 64 in the circumferential direction is set such that a distance L between the facing interference portions 64 is slightly smaller than a diameter D (see FIG. 22B) at a central portion of the spherical roller 56 in a longitudinal direction thereof. Thus, when an attempt is made to place each spherical roller 56 in the pocket 63, distal ends of the interference portions 64 come into abutting contact with a peripheral surface of the spherical roller 56. In this state, when the spherical roller 56 is pressed toward the inside of the pocket 63, the cage bars 62 are slightly deformed in a direction in which the distance L increases. The spherical roller 56 is then housed in the pocket 63 with a snap feeling given to a user. When the spherical roller 56 is housed in the pocket 63, the elastically deformed cage bars 62 return to an original state thereof. The spherical roller 56 housed in the pocket 63 is prevented from falling off from the pocket 63 during assembly of the bearing or the like because the distance L is slightly smaller than the diameter of the spherical roller 56.

In small- or medium-sized self-aligning roller bearings, the cages used in the bearing are also small- or medium-sized. Thus, the interference portions also have a small protrusion height t, allowing an appropriate dimensional accuracy to be relatively easily achieved for the interference portions. In other words, a difference (D - L) between the diameter D and the distance L can be relatively easily set to within a predetermined range, for example, to within 0.2% to 0.6% of the diameter D.

However, large-sized self-aligning roller bearings involve large-sized cages used and thus a large protrusion height t of the interference portions. That is, the interference portions are large in size, hindering the difference between the diameter D and the distance L from being set to within the predetermined range. As a result, when the difference is excessively large, the peripheral surface of each spherical roller is damaged when the spherical roller is inserted into the corresponding pocket. In some cases, for example, a problem may occur in which the spherical roller cannot be placed in the pocket even with a blow on the spherical roller.

On the other hand, when the difference is excessively small or has a negative value (the distance L is larger than the diameter D), the spherical roller can be easily placed in the pocket. However, a problem may occur in which the spherical roller falls off from the pocket during assembly.

### SUMMARY OF THE INVENTION

An object of the invention is to provide a self-aligning roller bearing and an assembly method for the self-aligning roller bearing that allow prevention of problems such as damage to spherical rollers at the time of insertion thereof into the respective pockets and a failure to place the spherical rollers in the corresponding pockets.

According to an aspect of the invention, a self-aligning roller bearing includes: an outer ring having, on an inner periphery thereof, an outer-ring raceway surface that is a recessed curved surface; an inner ring having, on an outer periphery thereof, two rows of inner-ring raceway surfaces that are recessed curved surfaces; a plurality of spherical rollers disposed in two rows between the outer-ring raceway surface and the individual inner-ring raceway surfaces; a pair of cages that holds the two rows of the spherical rollers such that the spherical rollers in each row are disposed at intervals in a circumferential direction of the cages, and a guide ring provided between the inner ring and both the cages and between the two rows of the spherical rollers. Each of the cages has a plurality of pockets, and the pockets house the respective spherical rollers and are identical in number to the spherical rollers in each row. At least one of the pockets in each cage has a larger area than an area of a cross section of the corresponding spherical roller that includes an axis of rotation thereof as viewed in a radial direction, so that each of the spherical rollers is enabled to pass through the at least one pocket without interfering with inner edges of the pocket.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a longitudinal sectional view of a self-aligning roller bearing according to an embodiment of the invention;
FIG. 2 is a perspective view illustrating a cage in the self-aligning roller bearing depicted in FIG. 1;
FIG. 3 is a sectional view illustrating a pocket with no interference portion;
FIGS. 4A to 4C are a plan views illustrating the pocket with no interference portion;
FIG. 5 is a sectional view illustrating a pocket with interference portions;
FIG. 6 is a plan view illustrating the pocket with the interference portions;
FIG. 7 is a sectional view illustrating a cage bar for the pocket with the interference portions;
FIG. 8 is a diagram illustrating an assembly process for the bearing in the invention;
FIG. 9 is a diagram illustrating the assembly process for the bearing in the invention;
FIG. 10 is a diagram illustrating the assembly process for the bearing in the invention;
FIG. 11 is a diagram illustrating the assembly process for the bearing in the invention;
FIG. 12 is a perspective view illustrating an example of a temporary fastener;
FIG. 13 is a side view illustrating an installation state of the temporary fastener depicted in FIG. 12;
FIG. 14 is a sectional view illustrating the installation state of the temporary fastener depicted in FIG. 12;
FIG. 15 is a perspective view illustrating the assembly process for the bearing in the invention;
FIG. 16 is a diagram illustrating the assembly process for the bearing in the invention;
FIG. 17 is a perspective view illustrating another example of the temporary fastener;
FIG. 18 is a sectional view illustrating an installation state of the temporary fastener depicted in FIG. 17;
FIG. 19 is a diagram illustrating a connection plate for the temporary fastener;
FIG. 20 is a longitudinal sectional view of a conventional self-aligning roller bearing; and
FIG. 21 is a perspective view illustrating a conventional cage; and
FIG. 22A is a plan view illustrating a conventional pocket with interference portions, and FIG. 22B is a sectional view illustrating the conventional pocket with the interference portions.

### DETAILED DESCRIPTION OF EMBODIMENTS

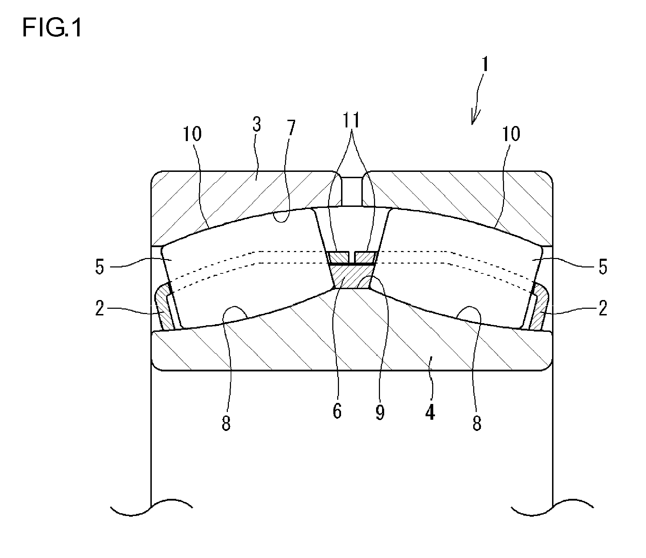

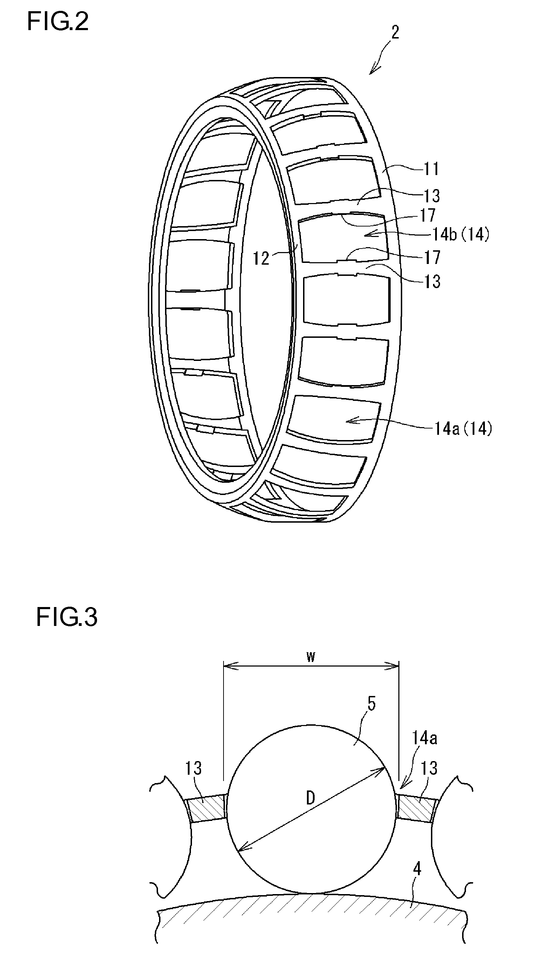

With reference to the drawings, embodiments of a bearing and an assembly method for the bearing in the invention will be described below in detail. FIG. 1 is a longitudinal sectional view of a bearing 1 according to an embodiment of the invention. FIG. 2 is a perspective view illustrating a cage 2 in the bearing 1 depicted in FIG. 1. The bearing 1 includes an outer ring 3 and an inner ring 4 disposed concentrically with each other, a plurality of spherical rollers 5, cages 2, and a guide ring 6 provided between the cages 2 and the inner ring 4 and between two rows of the spherical rollers 5. The spherical rollers 5 are disposed in two rows between the outer ring 3 and the inner ring 4. The cages 2 hold the two rows of the spherical rollers 5 such that the spherical rollers in each row are disposed at intervals in a circumferential direction of the cages 2. The guide ring 6 is provided between the cages 2 and the inner ring 4 and between two rows of the spherical rollers 5. An axial direction of the bearing 1 is also referred to herein as a lateral direction.

The outer ring 3 is laterally symmetrically formed and has a single outer-ring raceway surface 7 formed on an inner periphery of the outer ring 3. The outer-ring raceway surface 7 is a recessed curved surface and is shaped along a spherical surface (a part of the spherical surface) having a predetermined radius from a point (a central point of the bearing 1) on an axis of the bearing 1 not depicted in the drawings. Thus, as depicted in FIG. 1, the outer-ring raceway surface 7 is shaped like a circular arc in a section including the axis (central line) of the bearing 1, that is, a longitudinal section of the bearing 1.

The inner ring 4 is also laterally symmetrically formed and has two rows of inner-ring raceway surfaces 8, 8 on an outer periphery of the inner ring 4. Each inner-ring raceway surface 8 is a recessed curved surface, and as depicted in FIG. 1, is shaped like a circular arc in a longitudinal section of the bearing 1. The circular arc has the same radius as that of the spherical surface (a part of the spherical surface) forming the outer-ring raceway surface 7 of the outer ring 3. On an outer peripheral surface of the inner ring 4, a cylindrical surface 9 is formed between the two rows of the inner-ring raceway surfaces 8, 8. The cylindrical surface 9 is a surface parallel to the axis of the bearing 1. The inner-ring raceway surfaces 8, 8 and the cylindrical surface 9 configure the outer peripheral surface of the inner ring 4.

Each of the spherical rollers 5 is shaped like a barrel and has an outer peripheral surface 10 that is a protruding curved surface. The spherical rollers 5 roll on the outer-ring raceway surface 7 and the inner-ring raceway surface 8. The spherical rollers 5 are disposed in two rows between the outer-ring raceway surface 7 of the outer ring 3 and the two rows of the inner-ring raceway surfaces 8, 8 of the inner ring 4. A plurality of the spherical rollers 5 is provided along the circumferential direction in each row.

As depicted in FIG. 2, the cage 2 is generally annular, and cages 2 are provided for the respective rows of the spherical rollers 5. Each cage 2 has an inner circular-ring portion 11, an outer circular-ring portion 12, and a plurality of cage bars 13. The inner circular-ring portion 11 is positioned between the two rows of the spherical rollers 5, that is, on an inner side of the bearing. The outer circular-ring portion 12 faces the inner circular-ring portion 11 in the axial direction of the bearing 1 and is positioned on an outer side of the bearing. The cage bars 13 connect the inner circular-ring portion 11 and the outer circular-ring portion 12 together. The cage bars 13 are provided along the axial direction of the bearing 1. Areas each formed between the adjacent cage bars 13 in the circumferential direction are pockets 14 in which the respective spherical rollers 5 are housed. The cages 2 can be produced by press work of a metal sheet, for example, a carbon steel plate.

The guide ring 6 is a circular-ring-shaped member and is provided between the inner circular-ring portion 11 of each cage 2 and the inner ring 4 and between the two rows of the spherical rollers 5. The guide ring 6 is provided radially outward of the cylindrical surface 9 of the inner ring 4 and radially inward of the inner circular-ring portion 11 of each cage 2. A clearance is provided between the guide ring 6 and the cylindrical surface 9. A clearance is also provided between the guide ring 6 and the inner circular-ring portions 11. Thus, the guide ring 6 is positioned by the cylindrical surface 9 so as to have a slight movement margin in the radial direction. The cages 2 are positioned by the guide ring 6 so as to have a slight movement margin in the radial direction.

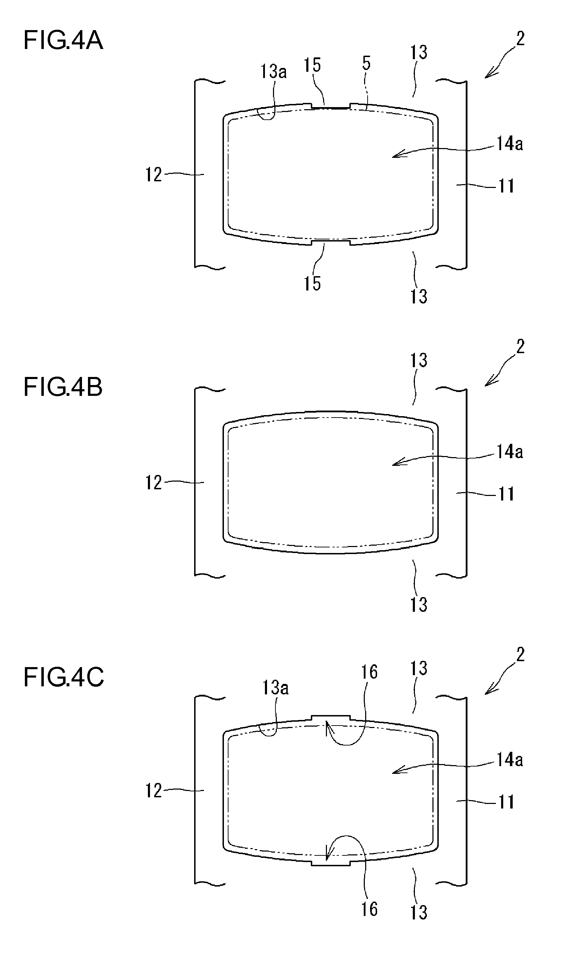

Each cage 2 in the embodiment has two types of pockets 14. That is, the cage 2 has first pockets 14a having no interference portion that prevents the spherical rollers 5 from falling off from the first pockets 14a and second pockets 14b having such interference portions. As depicted in FIGS. 3, and 4A to 4C, each of the first pockets 14a has a larger area than an area of a cross section of the corresponding spherical roller 5 that includes the axis of rotation thereof as viewed in the radial direction (an up-down direction in FIG. 3). Consequently, the spherical roller 5 can pass through the first pocket 14a without interfering with inner edges of the first pocket 14a. In other words, the size of the first pocket 14a as viewed in the radial direction is larger than the size of the cross section of the spherical roller 5 that includes the axis of rotation thereof. Consequently, the spherical roller 5 can pass through the first pocket 14a without interfering with inner edges of the first pocket 14a. A width w of the first pocket 14a at a central portion thereof in the axial direction is larger than a diameter D of the spherical roller 5 at a central portion thereof in the longitudinal direction. Therefore, as described below, when the spherical roller 5 is placed in the first pocket 14a from outside the cage 2 in the radial direction, the spherical roller 5 is prevented from being damaged as a result of interference of the inner edges of the first pocket 14a with the spherical roller 5. This also prevents a situation where the spherical roller 5 cannot be placed in the first pocket 14a.

Examples of pockets having no interference portion include: a form in which protruding portions 15 protruding from longitudinally central portions of respective side surfaces 13a of the cage bars 13 in the circumferential direction have a smaller protrusion height than conventional protruding portions, as depicted in FIG. 4A; and a form in which no protruding portion is present on side surfaces of the cage bars 13, as depicted in FIG. 4B. Another example of such pockets includes a form in which recessed portions 16 are formed in the respective side surfaces 13a of the cage bars 13 at central portions thereof in the longitudinal direction, as depicted in FIG. 4C.

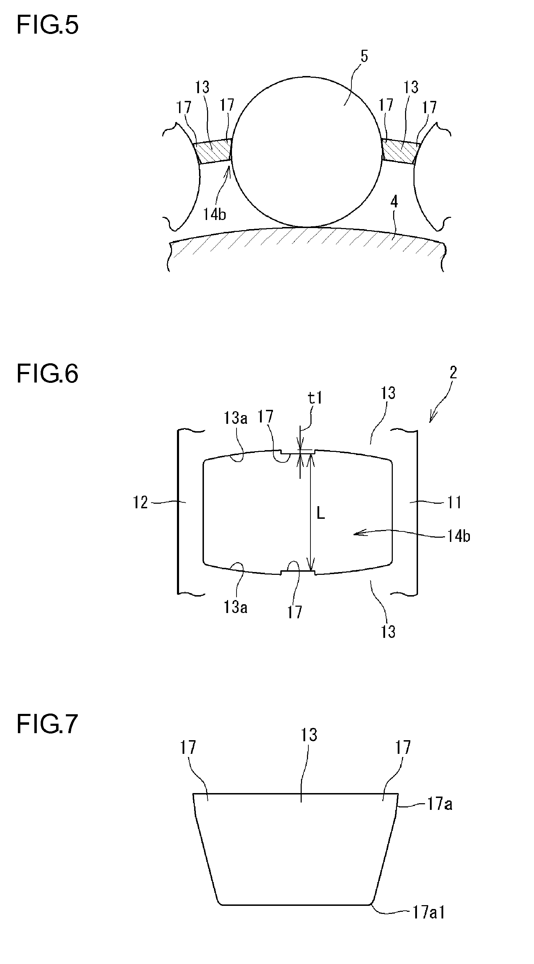

As depicted in FIGS. 5 and 6, each of the second pockets 14b has interference portions 17 at respective inner edges of the second pocket 14b to prevent the corresponding spherical roller 5 housed in the second pocket 14b from falling off. The interference portions 17 are protruding portions formed to protrude from the respective side surfaces 13a of the cage bars 13 in the circumferential direction. Each of the interference portions 17 is formed on the corresponding cage bar 13 at a central portion thereof in the longitudinal direction. The interference portion 17 is formed at two positions of each second pocket 14b. In other words, the interference portions 17 are formed on both the side surfaces of each cage bar 13. A protrusion height t1 of each interference portion 17 in the circumferential direction is set such that a distance L between facing interference portions 17 is slightly smaller than the diameter D of the spherical roller 5 at the central portion thereof in the longitudinal direction. Thus, the spherical rollers 5 housed in the second pockets 14b are prevented from falling off from the second pockets 14b during assembly of the bearing 1 or the like.

As described below, each spherical roller 5 is placed in the corresponding second pocket 14b from a radially inner side of the corresponding cage 2. This avoids a configuration in which the spherical roller 5 passes the interference portions 17 as in the related art. Therefore, when the spherical roller 5 is placed in the corresponding second pocket 14b, the spherical roller 5 is prevented from being damaged as a result of interference of the inner edges of the second pocket 14b with the spherical roller 5. This also prevents a situation where the spherical roller 5 cannot be placed in the second pocket 14b.

Since the spherical roller 5 need not be passed through the second pocket 14b, the protrusion height t1 may be slightly larger than a design value. Thus, dimensional accuracy needed for the interference portions 17 can be reduced as compared to dimensional accuracy needed for the conventional interference portions. The invention does not particularly limit the shape of a distal end surface 17a of each interference portion 17 that can come into abutting contact with a peripheral surface of the spherical roller 5. The distal end surface 17a may be, for example, a two-step inclined surface as depicted in FIG. 7. An inner end 17a1 of the distal end surface 17a in the radial direction may be round or chamfered. The round or chamfered shape prevents damage to the spherical roller 5 when the end 17a1 of the distal end surface 17a and the spherical roller 5 come into contact with each other.

The spherical rollers 5 are placed in the respective second pockets 14b from the inside of the cage 2. The spherical rollers 5 are placed in the respective first pockets 14a from the outside the first pockets 14a. The bearing is assembled as follows. The cages 2 in which the spherical rollers 5 are housed in the second pockets 14b are assembled to the inner ring 4, and the resultant inner ring 4 is inserted into the outer ring 3. The spherical rollers 5 are then placed in the first pockets 14a in the cages 2. Thus, when the bearing 1 is assembled, the inner ring 4 needs to be inserted into the outer ring 3. Consequently, the number and arrangement of the second pockets 14b are constrained. Such constraints vary according to the size of the bearing, the number of the spherical rollers in each row, the shape and size of the spherical rollers, the curvature of the outer-ring raceway surface or the inner-ring raceway surface, and the like. For example, in a bearing in which approximately four or five spherical rollers are provided in each row and in which each spherical roller is shaped like a common barrel, the bearing can be assembled when one or two pockets are the first pockets and the remaining pockets are the second pockets.

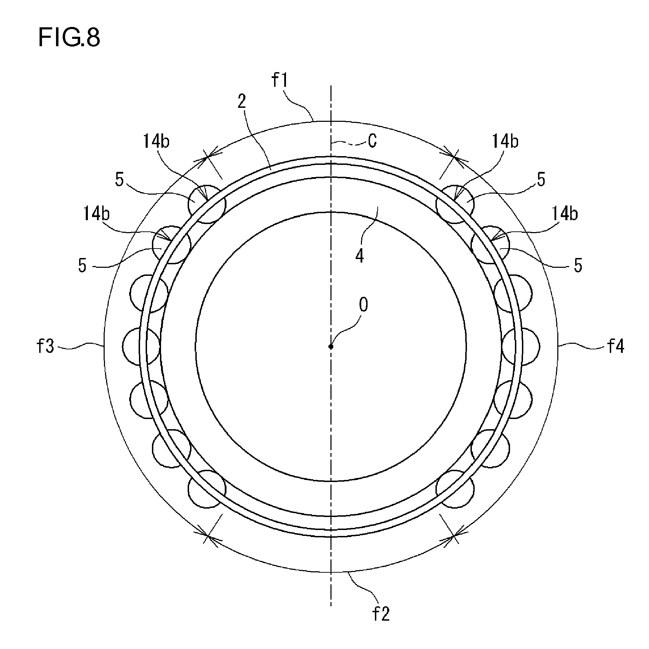

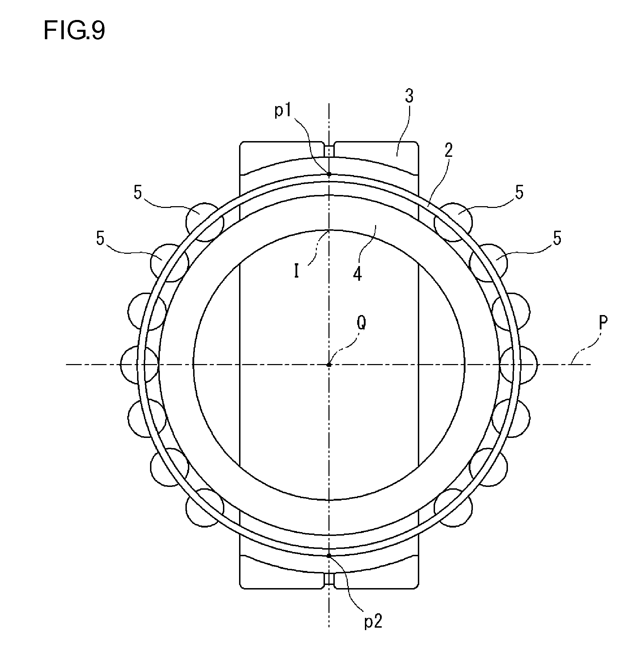

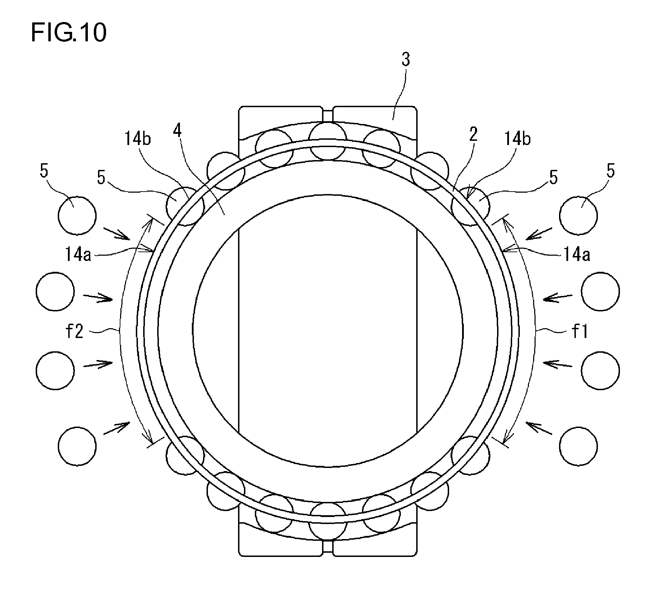

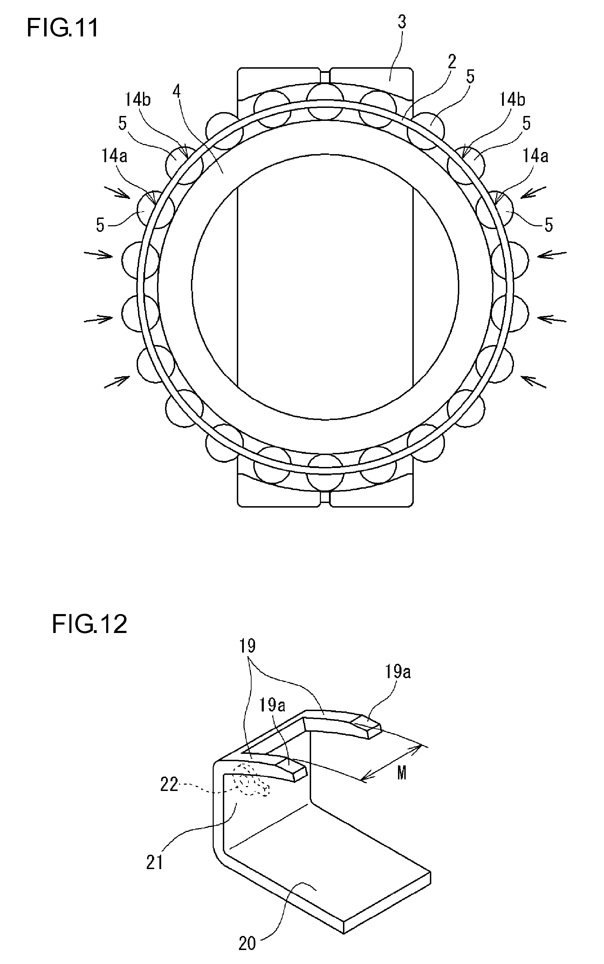

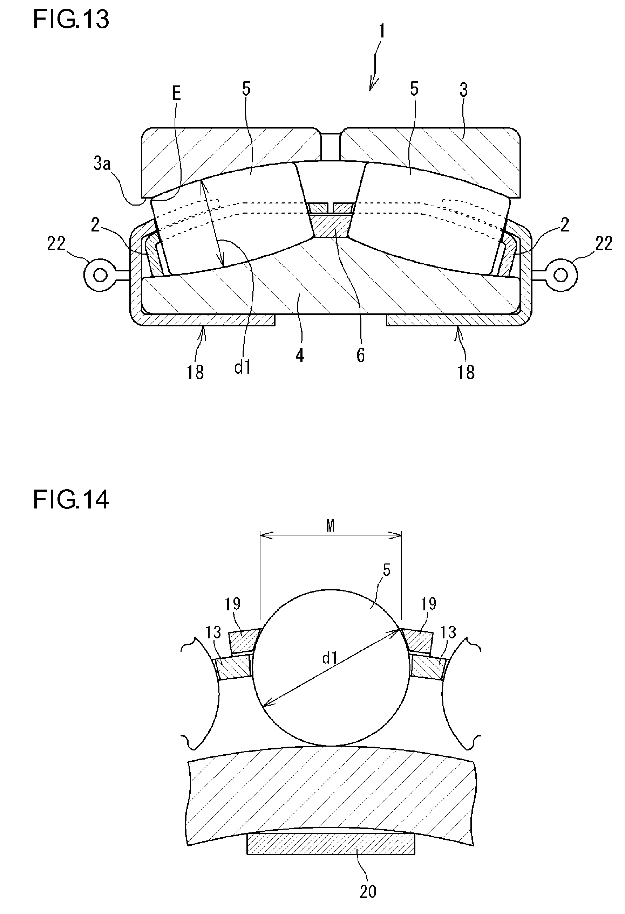

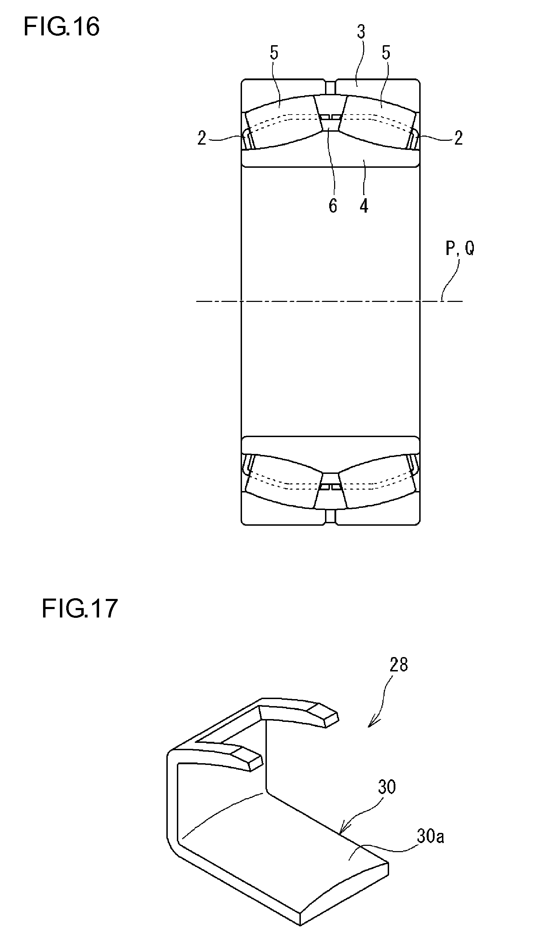

Now, an assembly method for the above-described bearing 1 will be described.
(1) First, as depicted in FIG. 8, two cages 2 are prepared in which the spherical rollers 5 have been placed in the respective second pockets 14b of the cages 2 from the inside of the cages 2. The two cages are assembled on the outer peripheral surface of the inner ring 4 along with the guide ring 6. The guide ring 6 is disposed between the two cages 2 and outside the cylindrical surface 9 of the inner ring 4. In the present embodiment, each cage 2 is divided into four areas along the circumferential direction of the cage 2, and the first pockets 14a or the second pockets 14b are provided in each of the four areas. Specifically, two areas in each cage 2 positioned on a diameter line C of the cage 2 and facing each other across a center O of the cage 2 are referred to as a first area f1 and a second area f2. Two areas in each cage 2 positioned between the first area f1 and the second area f2 in the circumferential direction of the cage 2 are referred to as a third area f3 and a fourth area f4. The pockets included in the first area f1 and the second area f2 are the first pockets 14a. The pockets included in the third area f3 and the second area f4 are the second pockets 14b. That is, the groups of the first pockets 14a and the groups of the second pockets 14b are alternately disposed along the circumferential direction of the cages 2. In the present embodiment, four first pockets 14a are included in each of the first area f1 and the second area f2, and seven second pockets 14b are included in each of the third area f3 and the fourth area f4.
(2) Next, as depicted in FIG. 9, the inner ring 4 with the guide ring 6 and the cages 2 assembled thereon is inserted into the outer ring 3. The inner ring 4 is placed in the outer ring 3 such that an axis Q of the inner ring 4 (in FIG. 9, the axis Q penetrates the drawing plane perpendicularly thereto) is substantially orthogonal to an axis P of the outer ring 3. At this time, the inner ring 4 is inserted into the outer ring 3 such that the axis P of the outer ring 3 is substantially orthogonal to a virtual line I connecting a circumferential center p1 in the first area f1 where the first pockets 14a having no spherical roller 5 housed therein are positioned to a circumferential center p2 of the second area f2 where the first pockets 14a also having no spherical roller 5 housed therein are positioned. The ranges of the third area f3 and the fourth area f4 are selected so as to allow the inner ring 4 with the guide ring 6 and the cages 2 assembled on the inner ring 4 to be inserted into the outer ring 3. In other words, the number of the second pockets 14b is set so as to allow the inner ring 4 to be inserted into the outer ring 3. In the present embodiment, the number of the second pockets 14b in each of the third area f3 and the fourth area f4 is set to seven as described above.
   When the inner ring 4 with the guide ring 6 and the cages 2 assembled thereon are inserted into the outer ring 3, an end E (see FIG. 13) of each spherical roller 5 located on an outer side thereof in the axial direction and on an outer side thereof in the radial direction first comes into abutting contact with an inner peripheral surface3a of the outer ring 3. Consequently, the number of the second pockets 14b, that is, the number of the spherical rollers 5 housed in the second pockets 14b, is constrained to a predetermined value. In the present embodiment, the number of the second pockets 14b is constrained to 14 (7 x 2 = 14). The value "14" is an upper limit, and in the above-described bearing 1, the number of the second pockets 14b may be, for example, 10 (5 x 2 = 10) or 6 (3 x 2 = 6).
(3) As depicted in FIG. 10, the inner ring 4 is rotated by approximately 90° such that the first pockets 14a in the first area f1 and the second area f2 appear outside the outer ring 3. From the outside of the cages 2, one spherical roller 5 is placed in one of the first pockets 14a positioned in the first area f1 and the second area f2 in an outside portion of the corresponding cage 2 of the inner ring 4 disposed in the outer ring 3. The temporary fastener 18 is then installed on the inner ring 4 and the cage 2 to prevent the housed spherical roller 5 from falling off from the first pocket 14a. Placement of the spherical roller 5 and installation of the temporary fastener 18 as described above are repeated for each of the remaining first pockets 14a. The spherical rollers 5 are housed in all the pockets in each cage 2 as depicted in FIG. 11. In FIG. 11, illustration of the temporary fasteners 18 is omitted for simplifying the drawing.
   The temporary fasteners 18 are members that prevent the spherical rollers 5 from falling off from the first pocket 14a during assembly of the bearing. As depicted in FIGS. 12 to 14, each temporary fastener 18 includes a pair of arm portions 19, 19, a base portion 20, and an intermediate portion 21. The arm portions 19, 19 engage with the peripheral surface of the spherical roller 5. The base portion 20 engages with an inner peripheral surface 4a of the inner ring 4. The intermediate portion 21 connects the arm portions 19, 19 to the base portion 20. A tapered surface 19a is formed on a distal end of each of the arm portions 19 so that the arm portion 19 is tapered toward the end. The tapered surface 19a formed at the distal end of the arm portion 19 allows the assembly to be achieved without interfering with the outer ring 3. An upper surface (the surface engaging with the inner peripheral surface of the inner ring 4) and a lower surface of the base portion 20 are both flat surfaces. A distance M between the arm portions 19, 19 is smaller than a diameter d1 of the spherical roller 5 at a part thereof that engages with the distal ends of the arm portions 19, 19. Consequently, the arm portions 19, 19 allow preventing the spherical roller 5 housed in the first pocket 14a from falling off from the first pocket 14a.
   The temporary fastener 18 in the present embodiment has a ring-shaped tab portion 22. The tab portion 22 is formed on an outer surface of the intermediate portion 21 of the temporary fastener 18. Picking the tab portion 22 with the fingers allows the temporary fastener 18 to be easily removed from the inner ring 4 and the cage 2 after assembly of the bearing 1 is completed. The temporary fastener 18 can be produced, for example, by press work of a carbon steel plate. The tab portion 22 may be formed to be integrated with the intermediate portion 21 of the temporary fastener 18 or may be formed separately from the intermediate portion 21 and fixed to the intermediate portion 21.

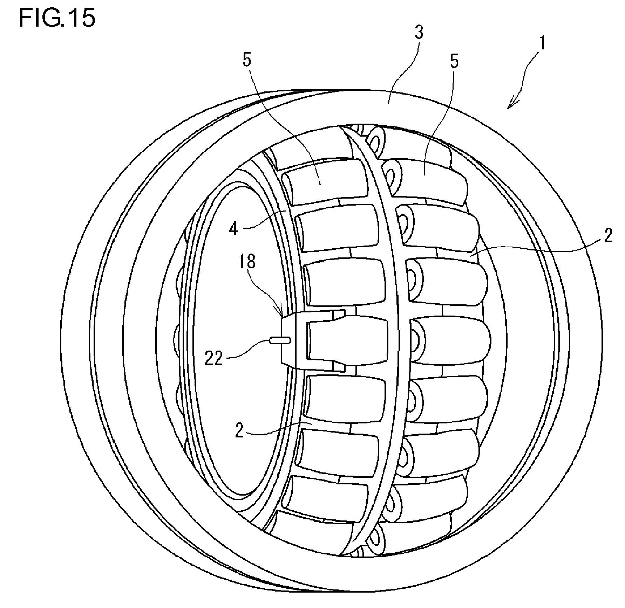

   FIG. 15 is a perspective view illustrating the bearing 1 in the process depicted in FIG. 11. FIG. 15 illustrates that the spherical rollers 5 are housed in all of the first and second pockets 14a, 14b. To facilitate understanding, FIG. 15 depicts the temporary fastener 18 only for one spherical roller 5 housed in the first pocket 14a.
(4) As depicted in FIG. 16, the inner ring 4 with a needed number of spherical rollers 5 completely housed therein is rotated in the outer ring through by 90° so that the axis Q of the inner ring 4 is substantially aligned with the axis P of the outer ring 3. Subsequently, the temporary fasteners 18 installed on the inner ring 4 and the cage 2 are removed from the inner ring 4 and the cages 2 to complete assembly of the bearing 1. At this time, each temporary fastener 18 can be easily removed by picking the tab portion 22 of the temporary fastener 18 with the fingers and then pulling out the temporary fastener 18.

The invention is not limited to the above-described embodiment, and various changes may be made to the embodiment within the scope of the claims. For example, in the above-described embodiment, the pockets in the cages include the first pockets and the second pockets, but all the pockets in the cages may be the first pockets. That is, all the pockets in the cages may be the first pockets, each having a larger area than an area of a cross section of the spherical roller that includes the axis of rotation thereof so that the spherical roller can pass through the pocket without interfering with the inner edges of the pocket. In this case, the bearing may be assembled as described below.

First, the guide ring and the pair of the cages are assembled on the outer peripheral surface of the inner ring. The inner ring with the guide ring and the cages assembled thereon is inserted into the outer ring. The inner ring is placed in the outer ring so that the axis of the inner ring is substantially orthogonal to the axis of the outer ring. Subsequently, the spherical roller is placed in the corresponding pocket in the corresponding cage located in an outside portion of the inner ring disposed in the outer ring, and the temporary fastener is installed on the inner ring and the cage to prevent the housed spherical roller from falling off. This process is repeated for each of the remaining spherical rollers. The inner ring with all the spherical rollers completely housed therein is rotated in the outer ring by approximately 90° so that the axis of the inner ring is substantially aligned with the axis of the outer ring. The temporary fasteners installed on the cages are then removed to complete assembly of the bearing.

In this form, all the pockets in the cages are each a pocket through which the corresponding spherical roller can pass without interfering with the inner edges of the pocket. Consequently, when the bearing is assembled, possible problems can be prevented such as damage to the spherical rollers and a failure to place the spherical rollers in the pockets. In this form, installation and removal of the temporary fastener need to be performed for all of the spherical rollers. This increases man-hours. However, the pockets in the cages are formed according to the same specifications, and thus, advantageously, only one mold is needed to produce the pockets in the cages by press work, and the process of producing the cages can be simplified.

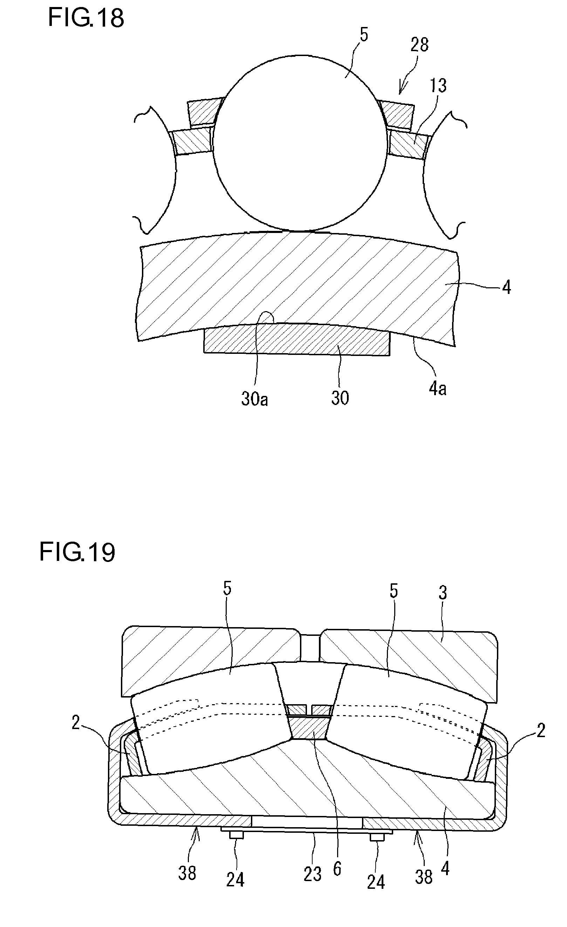

In the above-described embodiment, the upper surface of the base portion of each temporary fastener is a flat surface. However, the upper surface may be a curved surface (round shape) shaped to conform to the curved surface (round shape) of the inner peripheral surface of the inner ring as depicted in FIG. 17. An upper surface 30a of a base portion 30 that engages with the inner peripheral surface of the inner ring is shaped like such a curved surface (round shape). This enables the base portion 30 to come into close contact with the inner peripheral surface 4a of the inner ring 4 (see FIG. 18), allowing a temporary fastener 28 to be firmly installed on the inner ring 4. In FIG. 17, the round shape of the upper surface 30a of the base portion 30 is overdrawn in order to facilitate understanding.

In the above-described embodiment, each temporary fastener is independently installed on the inner ring and the cage. However, as depicted in FIG. 19, a pair of temporary fasteners 38 in which the temporary fasteners 38 are adjacent to each other in the axial direction can be connected together using a connection plate 23. The connection plate 23 can be fixed to each of the temporary fasteners 38, for example, using screws 24. In this form, the temporary fasteners 38 can be more firmly installed on the inner ring 4 and the cages 2. Unlike the temporary fastener 18 illustrated in FIGS. 12 to 14, the temporary fastener 38 depicted in FIG. 19 has no tab portion formed thereon.

In the above-described embodiment, each cage is divided into the four areas along the circumferential direction. However, the invention is not limited to this. For example, the cage may be divided into two areas along the circumferential direction, and first pockets may be formed in one of the areas, whereas second pockets may be formed in the other. In this case, the ranges of the two areas may be the same or one of the areas may be larger than the other.

In the above-described embodiment, the first pockets in the first area are equal in number to the first pockets in the second area. However, the number of the first pockets may be different between the first area and the second area. In the above-described embodiment, the second pockets in the third area are equal in number to the second pockets in the fourth area. However, the number of the second pockets may be different between the third area and the fourth area.

In the above-described embodiment, 22 spherical rollers are housed in each cage. However, the number of the spherical rollers is not particularly limited in the invention. The number of the spherical rollers may be even or odd.

The self-aligning roller bearing and the assembly method for the self-aligning roller bearing of the invention prevents possible problems such as damage to the spherical rollers at the time of insertion thereof into the respective pockets and a failure to place the spherical rollers in the pockets.

## Claims

1. A self-aligning roller bearing comprising:
an outer ring having, on an inner periphery thereof, an outer-ring raceway surface that is a recessed curved surface;
an inner ring having, on an outer periphery thereof, two rows of inner-ring raceway surfaces that are recessed curved surfaces;
a plurality of spherical rollers disposed in two rows between the outer-ring raceway surface and the individual inner-ring raceway surfaces;
a pair of cages that holds the two rows of the spherical rollers such that the spherical rollers in each row are disposed at intervals in a circumferential direction of the cages; and
a guide ring provided between the inner ring and both the cages and between the two rows of the spherical rollers, wherein
each of the cages has a plurality of pockets, the pockets housing the respective spherical rollers and being identical in number to the spherical rollers in each row, and
at least one of the pockets in each cage has a larger area than an area of a cross section of the corresponding spherical roller that includes an axis of rotation thereof as viewed in a radial direction, so that each of the spherical rollers is enabled to pass through the at least one pocket without interfering with inner edges of the pocket.

2. The self-aligning roller bearing according to claim 1, wherein
all of the pockets in each of the cages each have a larger area than an area of a cross section of the corresponding spherical roller that includes an axis of rotation thereof as viewed in a radial direction, so that the spherical roller is enabled to pass through the pocket without interfering with inner edges of the pocket.

3. The self-aligning roller bearing according to claim 1, wherein
the pockets in each of the cages includes first pockets each having a larger area than an area a cross section of the corresponding spherical roller that includes an axis of rotation thereof as viewed in a radial direction, so that the spherical roller is enabled to pass through the first pocket without interfering with inner edges of the first pocket and
second pockets each having interference portions formed at the respective inner edges of the second pocket to prevent the spherical roller housed in the second pocket from falling off.

4. The self-aligning roller bearing according to claim 3, wherein
the first pockets are formed in a first area and a second area in each cage, the areas being positioned on a diameter line of the cage and facing each other across a center of the cage, and
the second pockets are formed in a third area and a fourth area in each cage, the areas being positioned between the first area and the second area in the circumferential direction.

5. The self-aligning roller bearing according to claim 4, wherein
the number of the second pockets included in the third area and the number of the second pockets included in the fourth area are determined such that the inner ring with the cages assembled thereon and each having the spherical rollers housed in the second pockets in the third area and the fourth area can pass through a bore of the outer ring.

6. An assembly method for the self-aligning roller bearing as claimed in claim 2, the assembly method comprising:
assembling the guide ring and the pair of cages on an outer peripheral surface of the inner ring;
inserting the inner ring with the guide ring and the cages assembled thereon into the outer ring and placing the inner ring in the outer ring so that an axis of the inner ring is substantially orthogonal to an axis of the outer ring;
repeating, for each of the spherical rollers, steps of: placing the spherical roller in the corresponding pocket in the corresponding cage located in an outside portion of the inner ring disposed in the outer ring; and installing, on the inner ring and the cage, a temporary fastener that prevents the housed spherical roller from falling off; and
rotating the inner ring with all the spherical rollers completely housed therein in the outer ring by approximately 90° so that the axis of the inner ring is substantially aligned with the axis of the outer ring, and then removing the temporary fasteners installed on the cages.

7. An assembly method for the self-aligning roller bearing as claimed in claim 3, the assembly method comprising:
assembling, on an outer peripheral surface of the inner ring, the guide ring and the pair of cages each having spherical rollers placed in the second pockets from an inside of the cage;
inserting the inner ring with the guide ring and the cages assembled thereon into an outer ring and placing the inner ring in the outer ring so that an axis of the inner ring is substantially orthogonal to an axis of the outer ring;
for each of the first pockets in each cage located in an outside portion of the inner ring disposed in the outer ring, repeating steps of: placing the spherical roller in the first pocket; and installing, on the inner ring and the cage, a temporary fastener that prevents the housed spherical roller from falling off; and
rotating the inner ring with all the spherical rollers completely housed therein in the outer ring by approximately 90° so that the axis of the inner ring is substantially aligned with the axis of the outer ring, and then removing the temporary fasteners installed on the cages.

8. The assembly method for a self-aligning roller bearing according to claim 6 or 7, wherein
the temporary fastener includes a pair of arm portions that engages with a peripheral surface of the spherical roller, a base portion that engages with an inner peripheral surface of the inner ring, and an intermediate portion that connects the arm portions to the base portion, and a distance between the arm portions is smaller than a diameter of the spherical roller at a part thereof with which distal ends of the arm portions engage.

9. The assembly method for a self-aligning roller bearing according to claim 8, wherein
a surface of the base portion that engages with the inner peripheral surface of the inner ring is a surface with a round shape corresponding to a round shape of the inner peripheral surface.

10. The assembly method for a self-aligning roller bearing according to claim 8 or 9, wherein
a tab portion is formed on an outer surface of the intermediate portion.
